(19) **Europäisches Patentamt / European Patent Office / Office européen des brevets**

(11) **EP 1 227 959 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(21) Anmeldenummer: **00975996.0**

(22) Anmeldetag: **04.11.2000**

(51) Int Cl.:
**B60T 8/00** *(2006.01)*

(86) Internationale Anmeldenummer:
**PCT/EP2000/010885**

(87) Internationale Veröffentlichungsnummer:
**WO 2001/034445 (17.05.2001 Gazette 2001/20)**

(54) **VERFAHREN ZUM REDUZIEREN EINES RADSCHLUPFS EINES KRAFTFAHRZEUGS**

METHOD FOR REDUCING THE WHEEL SLIP OF A MOTOR VEHICLE

PROCEDE PERMETTANT DE REDUIRE LE PATINAGE DE ROUE D'UN VEHICULE AUTOMOBILE

(84) Benannte Vertragsstaaten:
**DE FR GB IT SE**

(30) Priorität: **11.11.1999 DE 19954131**

(43) Veröffentlichungstag der Anmeldung:
**07.08.2002 Patentblatt 2002/32**

(73) Patentinhaber: **ZF FRIEDRICHSHAFEN Aktiengesellschaft**
**88038 Friedrichshafen (DE)**

(72) Erfinder: **SOMMER, Norbert**
**88255 Baienfurt (DE)**

(56) Entgegenhaltungen:
**EP-A- 0 911 234        DE-A- 3 234 282**
**DE-A- 4 314 797**

**Beschreibung**

Die Erfindung betrifft ein Verfahren zum Reduzieren eines Radschlupfs eines Kraftfahrzeugs nach dem Oberbegriff von Anspruch 1.

Wenn Kraftfahrzeuge durch eine Kurve fahren, laufen die kurveninneren Räder auf einer Bahn mit einem kleineren Kurvenradius als die kurvenäußeren Räder. Da die kurveninneren Räder dabei einen kürzeren Weg zurücklegen als die kurvenäußeren Räder, müssen ihre Umfangsgeschwindigkeit und damit ihre Drehzahl entsprechend geringer sein. Um dies zu ermöglichen, werden die Räder einer angetriebenen Fahrzeugachse, abgesehen von Einzelradantrieben, über Differentialgetriebe angetrieben, so daß die Räder einer Achse auch in der Kurve ohne einen Radschlupf gegenüber der Fahrbahn abrollen können. Dabei stützen sich die Vortriebskräfte der Räder einer Achse gegenseitig an der Fahrbahn ab. Rutscht ein Rad durch, entsteht gegenüber der Fahrbahn ein Radschlupf und das Abstützmoment reduziert sich entsprechend auf ein Moment, das sich aus der Reibleistung des durchdrehenden Rads ergibt. Das Vortriebsmoment des anderen Rads verringert sich entsprechend, so daß die Traktion des Fahrzeugs stark vermindert ist. Ferner wird durch den Radschlupf die Seitenführung des Rads und damit die Fahrzeugstabilität des Kraftfahrzeugs stark beeinträchtigt.

Um die Traktion zu verbessern und auch sehr häufig um fahrdynamische Korrekturen durchzuführen, werden Differentialgetriebe mit elektronisch geregelten Sperren verwendet. Ferner werden die Bremsen einzelner Räder gezielt angesteuert, um das Traktions- und Stabilitätsverhalten des Kraftfahrzeugs positiv zu beeinflussen.

Bei diesen Regelungen dient der Radschlupf als Regelgröße, d.h. wenn ein Rad so stark schlupft, daß die Differentialsperre oder eine Bremse den Schlupf verringern kann, dann werden diese aktiviert. Dazu muß der Radschlupf bestimmt werden. Bei bestehenden Systemen wird die Referenzgeschwindigkeit des Kraftfahrzeugs zur Fahrbahn bestimmt. Über die Referenzgeschwindigkeit wird die Sollgeschwindigkeit bzw. die Drehzahl der Räder berechnet und mit der Istumfangsgeschwindigkeit bzw. der Drehzahl der Räder verglichen. Die Referenzgeschwindigkeit muß möglichst genau bekannt sein. Die Messung oder Berechnung der Fahrzeugreferenzgeschwindigkeit ist sehr aufwendig. Bei Allradfahrzeugen muß hier eine spezielle Sensorik verwendet werden oder die Referenzgeschwindigkeit muß über verschiedene Verfahren geschätzt werden.

In der DE 43 14 797 A1 ist eine Regeleinrichtung zur Verbesserung von Traktion und Fahrstabilität eines Kraftfahrzeugs mit zwei oder mehr Achsen angegeben. Hierbei sind in einem Ausführungsbeispiel 2 von 3 Wellen eines Differentials einer angetriebenen Achse kraftschlüssig miteinander verbunden. Es kann damit ohne jeden Regeleingriff auch bei Kurvenfahrten der Schlupf eines Antriebsrades verhindert werden. In weiteren Ausführungsbeispielen sind die beiden Wellen der Räder der angetriebenen Achse entweder mit 2 Wellen eines dreiwelligen Umlaufgetriebes oder mit einer Welle und dem drehbar gelagerten Gehäuse einer hydraulischen Verdrängungsmaschine kraftschlüssig verbunden. Wird die kraftschlüssige Verbindung in Form eines Hydraulikgetriebes vorgenommen, sind aktive Regeleingriffe zur weiteren Verbesserung der Fahrstabilität möglich. Die aktiven Regeleingriffe können dabei in Abhängigkeit von verschiedenen Variablen wie z. B. die Fahrgeschwindigkeit und Lenkradeinschlag, d. h. Lenkwinkel, erfolgen. Mit aktiven Regeleingriffen kann zudem ein Antiblockiersystem der Bremsen vereinfacht werden. Hierbei sind unter anderem Sensoren vorgesehen, mit denen die Räderwinkelgeschwindigkeit gemessen wird.

Der Erfindung liegt die Aufgabe zugrunde, mit einfachen Mitteln die Traktion und Fahrstabilität eines Kraftfahrzeugs zu verbessern, ohne die Referenzgeschwindigkeit des Kraftfahrzeugs zu kennen. Sie wird gemäß der Erfindung durch die Merkmale des Anspruchs 1 gelöst.

Nach der Erfindung werden die Drehzahlen der Räder ermittelt. Diese sind in erster Näherung für die Umfangsgeschwindigkeit der Räder repräsentativ, da sie im allgemeinen in einem linearen Zusammenhang zur Umfangsgeschwindigkeit stehen. Aus den Drehzahlen von Rädern der rechten und von Rädern der linken Fahrzeugseite einer Achse wird unter Verwendung geometrischer Fahrzeugparameter, insbesondere der Spurweite der Räder, ein virtueller Kurvenradius errechnet. Die Mitte der Achse würde sich auf dieser Kurve mit dem virtuellen Kurvenradius bewegen, wenn sie nicht mit dem Kraftfahrzeug gekoppelt wäre und wenn die Räder keinen Radschlupf aufweisen. Ferner wird ein Sollradius aus einem mittleren Einschlagwinkel der Räder unter Verwendung von Fahrzeugparametern, insbesondere dem Radstand der Fahrzeugachsen errechnet. Der mittlere Einschlagwinkel der Räder ergibt sich aus dem Mittelwert des Einschlagwinkels des kurvenäußeren Rads und des kurveninneren Rads einer Achse. Die Mitte der Achse würde sich auf einer solchen Kurve bewegen, wenn die Räder schlupffrei abrollen.

In einer elektronischen Steuereinheit, die zweckmäßigerweise einen Mikroprozessor umfaßt, wird der virtueller Kurvenradius mit dem Sollradius verglichen. Wenn die Räder keinen Schlupf haben, stimmen der Sollradius und der virtuelle Radius überein. Aus dem Ergebnis des Vergleichs des virtuellen Kurvenradius mit dem Sollradius wird eine schlupfabhängige Kenngröße gebildet, die dazu dient, eine zugeordnete Bremse oder Differentialsperre eines Differentialgetriebes entsprechend zu aktivieren und zu regeln.

Zweckmäßigerweise enthält die Kenngröße das Verhältnis oder die Differenz des Sollradius zum virtuellen Kurvenradius, und zwar vorteilhaft in der Weise, daß die Aktivierung nur stattfinden kann, wenn der Sollradius größer als der virtuelle Radius, also das Verhältnis von Sollradius zum virtuellen Radius größer eins ist. Für die Kenngröße zur Ansteuerung der Differentialsperre bzw. einer Bremse kann es vorteilhaft sein, ferner die Veränderung des Ergebnisses über der Zeit und/oder weitere Fahrparameter zu berücksichtigen, z.B. die Giergeschwindigkeit und/oder Querbeschleunigung sowie das Antriebsmoment des Kraftfahrzeugs. Hierdurch können die Traktion und die Fahrstabilität eines Fahrzeugs in ein ausgewogenes Verhältnis gebracht werden.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt.

Es zeigt:

Fig. 1    in schematischer Darstellung die für die Erläuterung des erfindungsgemäßen Verfahrens erforderlichen Teile eines Kraftfahrzeugs,

Fig. 2    den Verlauf des virtuellen Radius und des Sollradius über die Umfangsgeschwindigkeit eines kurveninneren Rads und

Fig.3    den Verlauf des virtuellen Radius und des Sollradius über die Umfangsgeschwindigkeit eines kurvenäußeren Rads.

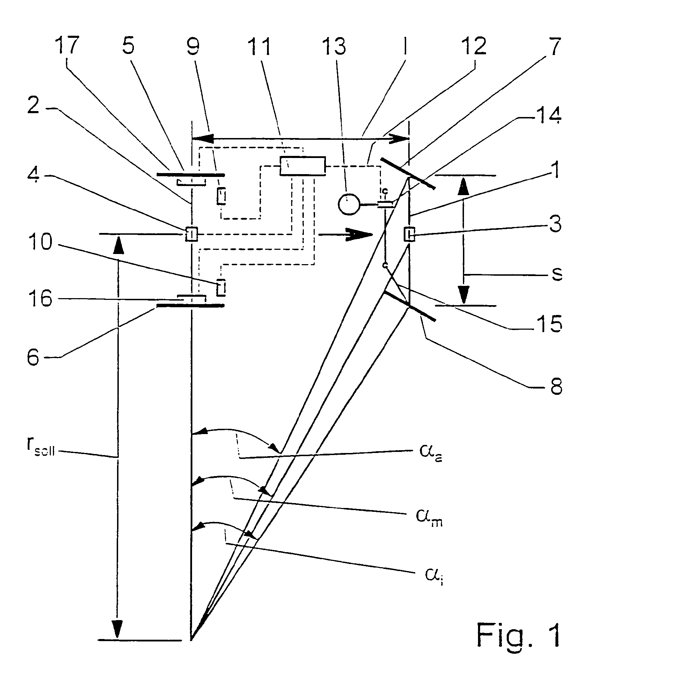

Fig. 1 zeigt eine Vorderachse 1 und eine Hinterachse 2 eines Kraftfahrzeugs, das sich in Pfeilrichtung bewegt. Die Vorderachse 1 trägt an ihren Enden Vorderräder 7 und 8, während an den Enden der Hinterachse 2 Hinterräder 5 und 6 gelagert sind. Bei einem Allradfahrzeug sind die Räder 5 und 6 der Hinterachse 2 über ein Differentialgetriebe 4 und die Räder 7 und 8 der Vorderachse über ein Differentialgetriebe 3 angetrieben. Besitzt das Fahrzeug nur eine angetriebene Achse 1 oder 2, entfällt eins der Differentialgetriebe 3 oder 4. In den Differentialgetrieben 3, 4 sind elektronisch ansteuerbare Differentialsperren integriert.

An den Rädern 5, 6, 7, 8 sind Bremsen angeordnet, von denen wegen der besseren Übersichtlichkeit nur die Bremsen 16 und 17 an den Rädern 6 und 5 dargestellt sind.

Die Räder 7 und 8 der Vorderachse 1 werden über ein Lenkrad 13, ein Lenkgetriebe 14 und ein Lenkgestänge 15 eingeschlagen, wobei der Einschlagwinkel des kurveninneren Rads 8 mit $\alpha_i$ und der Einschlagwinkel des kurvenäußeren Rads 7 mit $\alpha_a$ bezeichnet ist. Bezogen auf die Mitte der Vorderachse 1 ergibt sich ein mittlerer Einschlagwinkel $\alpha_m$. Es sind auch Fahrzeuge mit mehr als zwei Achsen und mit mehr als einer lenkbaren Achse 1 möglich.

Die Räder 5 und 6 bzw. 7 und 8 haben die gleiche Spurweite s, wobei die Vorderachse 1 von der Hinterachse 2 einen Radstand 1 aufweist.

Um die Drehzahlen der Räder 5, 6, 7, 8, bzw. deren Umfangsgeschwindigkeiten zu ermitteln, sind Drehzahlsensoren vorgesehen, von denen nur die Drehzahlsensoren 9 und 10 an der Hinterachse 2 dargestellt sind. Ferner wird der Einschlagwinkel $\alpha_a$ und $\alpha_i$ durch einen nicht näher dargestellten Sensor gemessen, der in der Vorderachse 1 integriert oder im Lenkgetriebe 14 untergebracht sein kann. Aus den gemessenen Werten läßt sich mit den gegebenen Fahrzeugparametern für das Lenksystem der mittlere Einschlagwinkel $\alpha_m$ berechnen.

Die Signale der gemessenen Werte werden über Signalleitungen 12 einer elektronischen Steuereinheit 11 zugeführt, die den virtuellen Radius $r_{virt}$ aus einer Umfangsgeschwindigkeit des kurvenäußeren Rads $v_a$ bzw. der entsprechenden Drehzahl und der Umfangsgeschwindigkeit des kurveninneren Rads $v_i$ nach der Formel

$$r_{virt} = s/2 * (v_a/v_i + 1)/(v_a/v_i - 1)$$

berechnet und mit dem Sollradius $r_{soll}$ nach der Formel

$$r_{soll} = 1/\tan \alpha$$

vergleicht.

Ist der Sollradius $r_{soll}$ gleich dem virtuellen Kurvenradius $r_{virt}$, kann davon ausgegangen werden, daß kein Radschlupf vorhanden ist. Weicht der virtuelle Kurvenradius $r_{virt}$ von dem Sollradius $r_{soll}$ ab, kann das Verhältnis von Sollradius $r_{soll}$ zum virtuellen Kurvenradius $r_{virt}$ bzw. die Abweichung als Kenngröße für die Regelung des Sperrdifferentials 3, 4 oder einer Bremse 16, 17 dienen oder mit weiteren Fahrparametern zu einer geeigneten Kenngröße verarbeitet oder für eine Fuzzy-Regel verwendet werden.

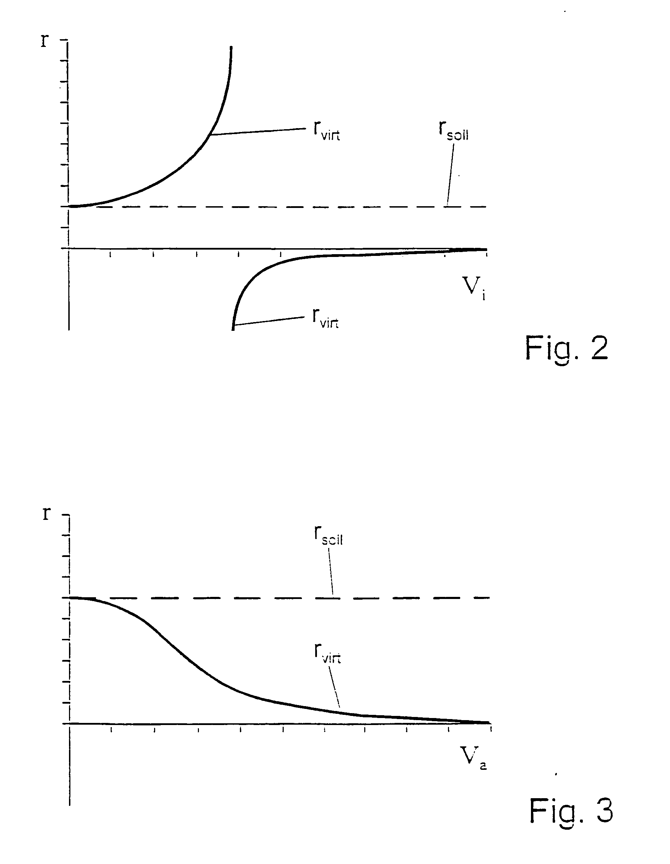

Die Fig. 2 zeigt den Verlauf des virtuellen Kurvenradius $r_{virt}$ mit einer durchgezogenen Linie über der Geschwindigkeit $v_i$ des kurveninneren Rads 6, 8, während der Sollradius $r_{soll}$ als gestrichelte Linie eingezeichnet ist. Da der Sollradius $r_{soll}$ nur vom Einschlagwinkel abhängt, ist er unabhängig von der Umfangsgeschwindigkeit $v_i$ des kurvenin-

neren Rads 6, 8 konstant. Anders verhält es sich beim virtuellen Kurvenradius $r_{virt}$. Erreicht die Umfangsgeschwindigkeit $v_i$ des kurveninneren Rads 6, 8 aufgrund des Radschlupfs die Umfangsgeschwindigkeit $v_a$ des kurvenäußeren Rads 5, 7, wird der Ausdruck $(v_a/v_i - 1) = 0$ und der virtuelle Radius $r_{virt}$ strebt gegen unendlich.

Fig. 3 zeigt den Verlauf des virtuellen Radius $r_{virt}$ über der Umfangsgeschwindigkeit $v_a$ des kurvenäußeren Rads 5, 7, wenn das kurvenäußere Rad 5, 7 schlupft. Da in diesem Fall die Umfangsgeschwindigkeit $v_a$ des kurvenäußeren Rads 5, 7 stets größer ist als die Umfangsgeschwindigkeit $v_i$ am kurveninneren Rad 6, 8, ergibt sich ein stetiger Kurvenverlauf.

Bezugszeichen

| 1 | Vorderachse |
|---|---|
| 2 | Hinterachse |
| 3 | Differentialgetriebe |
| 4 | Differentialgetriebe |
| 5 | Hinterrad außen |
| 6 | Hinterrad innen |
| 7 | Vorderrad außen |
| 8 | Vorderrad innen |
| 9 | Drehzahlsensoren |
| 10 | Drehzahlsensoren |
| 11 | Steuereinheit |
| 12 | Signalleitung |
| 13 | Lenkrad |
| 14 | Lenkgetriebe |
| 15 | Lenkgestänge |
| 16 | Bremse |
| 17 | Bremse |

| 1 | Radstand |
|---|---|
| s | Spurweite |
| $\alpha_a$ | Einschlagwinkel außen |
| $\alpha_i$ | Einschlagwinkel innen |
| $\alpha_m$ | mittlerer Einschlagwinkel |
| $v_a$ | Umfangsgeschwindigkeit außen |
| $v_i$ | Umfangsgeschwindigkeit innen |
| r | Radius |
| $r_{soll}$ | Sollradius |
| $r_{virt}$ | virtueller Radius |

**Patentansprüche**

1. Verfahren zum Reduzieren eines Radschlupfs eines Kraftfahrzeugs mit mindestens einer Achse (1), an deren Enden lenkbare Räder (7, 8) drehbar gelagert sind, und mit mindestens einer Achse (1, 2) deren Räder (5, 6, 7, 8) über ein Differentialgetriebe (3, 4) angetrieben werden, wobei im Fall eines Radschlupfs an einem der Räder einer angetriebenen Achse (1, 2) eine zugeordnete Bremse (16, 17) oder Differentialsperre geregelt betätigt wird, die Drehzahlen der Räder (5, 6, 7, 8) ermittelt werden, und der Einschlagwinkel ($\alpha_a$, $\alpha_i$) der lenkbaren Räder (7, 8) einer Achse (1) ermittelt wird, **dadurch gekennzeichnet**,

• daß aus den Drehzahlen von Rädern (6, 8) der rechten und von Rädern (5, 7) der linken Fahrzeugseite einer Achse (1, 2) unter Verwendung von Fahrzeugparametem ein virtueller Kurvenradius ($r_{virt}$) errechnet wird,
• daß ein Sollradius ($r_{soll}$) aus einem mittleren Einschlagwinkel ($\alpha_m$) der Räder (7, 8) oder einem entsprechenden Lenkwinkel eines Lenkgetriebes (14) unter Verwendung von Fahrzeugparametem errechnet wird,
• daß der virtuelle Kurvenradius ($r_{virt}$) mit dem Sollradius ($r_{soll}$) verglichen wird und
• daß das Ergebnis zur Bildung einer Kenngröße dient, um eine zugeordnete Bremse (16, 17) oder Differentialsperre eines Differentialgetriebes (3, 4) zu aktivieren.

**2.** Verfahren nach Anspruch 1, **dadurch gekennzeichnet, daß** die Kenngröße das Verhältnis oder die Differenz des Sollradius ($r_{soll}$) zum virtuellen Kurvenradius ($r_{virt}$) enthält.

**3.** Verfahren nach Anspruch 2, **dadurch gekennzeichnet, daß** eine zugeordnete Bremse (16, 17) oder Differentialsperre nur aktiviert wird, wenn das Verhältnis des Sollradius ($r_{soll}$) zum virtuellen Kurvenradius ($r_{virt}$) größer eins ist.

**4.** Verfahren nach einem der vorhergehenden Ansprüche, **dadurch gekennzeichnet, daß** die Kenngröße Veränderungen des Ergebnisses über der Zeit und/oder weitere Fahrparameter berücksichtigt.

**5.** Verfahren nach Anspruch 4, **dadurch gekennzeichnet, daß** als Fahrparameter die Giergeschwindigkeit und/oder Querbeschleunigung des Kraftfahrzeugs berücksichtigt werden.

### Claims

**1.** Method for reducing wheel slip of a motor vehicle with at least one axle (1) at the ends of which steerable wheels (7, 8) are pivoted and at least one axle (1, 2) the wheels (5, 6, 7, 8) of which are driven via a differential (3, 4), with wheel slip of one of the wheels of a driven axle (1, 2) causing controlled actuation of an assigned brake (16, 17) or differential lock and determination of the speeds of the wheels (5, 6, 7, 8) and the steer angles ($\alpha_a$, $\alpha_i$) of the steerable wheels (7, 8) of an axle (1), **characterized** in that

- a virtual radius of bend ($r_{virt}$) is determined using vehicle parameters and based on the speeds of the wheels (6, 8) of the right and wheels (5, 7) of the left vehicle side of an axle (1, 2);
- a nominal radius ($r_{nom}$) is determined using vehicle parameters and based on an average steer angle ($\alpha_m$) of the wheels (7, 8) or an appropriate steer angle of a steering box (14);
- the virtual radius of bend ($r_{virt}$) is compared to the nominal radius ($r_{nom}$); and
- the result serves to create a variable for activation of an assigned brake (16, 17) or a differential lock of a differential (3, 4).

**2.** Method according to claim 1, **characterized** in that the variable contains the relationship or the differential of nominal radius ($r_{nom}$) and virtual radius of bend ($r_{virt}$).

**3.** Method according to claim 2, **characterized** in that an assigned brake (16, 17) or differential lock is only activated if the ratio between nominal radius ($r_{nom}$) and radius of bend ($r_{virt}$) is greater than one.

**4.** Method according to one of the preceding claims, **characterized** in that the variable takes into account changes in results over time and/or further driving parameters.

**5.** Method according to claim 4, **characterized** in that the yaw velocity and/or transversal acceleration of the motor vehicle are considered as driving parameters.

### Revendications

**1.** Procédé de réduction du patinage des roues d'un véhicule automobile doté d'au moins un essieu (1), aux extrémités duquel sont montées des roues pivotantes (7, 8), celle-ci étant logées en rotation, et doté d'au moins un essieu (1, 2), dont les roues (5, 6, 7, 8) sont entraînées par une transmission avec différentiel (3, 4), sachant que en cas de patinage d'une des roues d'un essieu entraîné (1, 2) est actionné de façon réglée un frein associé (16, 17) ou un blocage de différentiel, sont déterminés les régimes des roues (5, 6, 7, 8), et est déterminé l'angle de braquage ($\alpha_a$, $\alpha_i$) des roues pivotantes (7, 8) d'un essieu (1) ,
**caractérisé en ce que**

- à partir des régimes de roues (6, 8) du côté droit du véhicule et de roues (5, 7) du côté gauche du véhicule d'un essieu (1, 2) est calculé un rayon de braquage virtuel ($r_{virt}$) en utilisant des paramètres du véhicule,
- **en ce que** un rayon de consigne ($r_{soll}$) est calculé à partir d'un angle de braquage moyen ($\alpha_m$) des roues (7, 8) ou à partir d'un angle de braquage correspondant d'une boîte de direction (14) et cela en utilisant des paramètres du véhicule,
- **en ce que** le rayon de braquage virtuel ($r_{virt}$) est comparé avec le rayon de consigne ($r_{soll}$) et

• **en ce que** le résultat est utilisé pour en former un paramètre pour activer un frein associé (16, 17) ou un blocage de différentiel d'une transmission avec différentiel (3, 4).

2. Procédé selon la revendicaiton 1, **caractérisé en ce que** le paramètre contient le rapport ou la différence du rayon de consigne ($r_{soll}$) par rapport au rayon de braquage virtuel ($r_{virt}$).

3. Procédé selon la revendicaiton 2, **caractérisé en ce que** un frein (16, 17) ou un blocage de différentiel associés ne sont activés que si le rapport du rayon de consigne ($r_{soll}$) par rapport au rayon de braquage virtuel ($r_{virt}$) est supérieur à 1.

4. Procédé selon une des revendications précédentes, **caractérisé en ce que** le paramètre tient compte également des variations du résultat sur le temps et/ou d'autres paramètres de déplacement

5. Procédé selon la revendication 4, **caractérisé en ce que** en tant que paramètres de déplacement sont pris en considération la vitesses de lacet et/ou l'accélération transversale du véhicule.

Fig. 1

Fig. 2

Fig. 3

**EP 1 227 959 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4314797 A1